# EUROPEAN PATENT SPECIFICATION

(11) **EP 3 452 361 B1**
(45) Date of publication and mention of the grant of the patent: **24.06.2020**
(21) Application number: 17742844.8
(22) Date of filing: 05.05.2017
(51) Int. Cl.: B62D 43/04

(54) **DEVICE FOR RAISING AND LOWERING A SPARE WHEEL OF A VEHICLE, HAVING AN IMPROVED ACTUATING DEVICE**
VORRICHTUNG ZUM ANHEBEN UND ABSENKEN EINES ERSATZRADES EINES FAHRZEUGS, MIT VERBESSERTER BETÄTIGUNGSVORRICHTUNG
DISPOSITIF PERMETTANT DE LEVER ET D'ABAISSER UNE ROUE DE SECOURS D'UN VÉHICULE, PRÉSENTANT UN DISPOSITIF D'ACTIONNEMENT AMÉLIORÉ

(30) Priority: 06.05.2016 IT UA20163206
(43) Date of publication of application: 13.03.2019
(73) Proprietor: Proma S.p.A., 81020 San Nicola La Strada (CE) (IT)
(72) Inventor: SCRIBANO, Giovanni, 10093 Collegno (TO) (IT)
(74) Representative: Torredimare, Luca
(86) International application number: PCT/IB2017/052623
(87) International publication number: WO 2017/191606

(56) References cited:
- EP-A2- 0 139 152
- EP-A2- 2 142 422
- DE-A1- 19 834 539
- FR-A1- 2 727 078
- US-A- 2 661 130

## Description

The present invention relates to a device for raising and lowering a spare wheel of a vehicle.

In vehicles equipped with a big spare wheel, such as, for example, vans, all-terrain vehicles and the like, the spare wheel is typically positioned externally under the rear luggage compartment of the vehicle. Generally, the spare wheel is arranged horizontally near the rear bumper of the vehicle. In such cases, since these spare wheels are quite big and heavy, the vehicle is equipped with a device that allows raising and lowering the spare wheel. The devices known in the art include a manually controlled actuation device, by means of which the user can control, via a flexible cable, the raising and lowering of the wheel. For safety reasons, such devices must also include a retaining system for firmly retaining the wheel in the raised position.

One example of such devices is described in European patent no. EP 2142422 B1 granted to the present Applicant. However, one drawback of such a device lies in the fact that, if the engagement member accidentally comes out of the seat of the transmission member, there is a risk that the spare wheel might dangerously come out of its housing and go down.

DE 19834539 A1 relates to a jack for a spare wheel which is intended for lifting a spare wheel to be mounted at the level of the lower face of a vehicle shell and which comprises the following members: a vertical driving shaft which is perpendicular to the vehicle shell; a pulley or take-up cylinder which driven by the driving shaft through a reduction gear and on which a lifting cable can be wound up; and an abutment which can be mounted on the free and vertical end area of the lifting cable and which is used for carrying the spare wheel. In order to increase the operation reliability, this jack is designed so that the pulley or take-up cylinder is located on a horizontal winding shaft and is connected thereto so as to be blocked upon rotation. The reduction gear is made in the form of a worm gear in which the worm screw is located on the driving shaft while the wheel thereof is located on the winding shaft.

The present invention aims at providing a device for raising and lowering a spare wheel of a vehicle which can overcome the drawbacks of the prior art, and which can be manufactured in a simple and economical manner.

According to the present invention, this object is achieved through a device having the features set out in claim 1.

The features and advantages of the device according to the present invention will become apparent in the light of the following detailed description, which is provided merely by way of nonlimiting example with reference to the annexed drawings, wherein:
- Figures 1, 2 and 3 are schematic side views showing a first embodiment of the device according to the present invention in three different operating positions;
- Figures 4, 5, 6 and 7 are more detailed perspective views of the part indicated by arrow V in Figure 1, showing the wheel raising sequence;
- Figure 8a is an exploded view of an actuation device indicated by arrow VIII in Figure 1;
- Figure 8b is an exploded bottom view of some parts of the actuation device;
- Figure 8c is a bottom view of some parts of the actuation device;
- Figures 9, 10 and 11 are perspective views showing a second embodiment of the device according to the present invention in three different operating positions; and
- Figure 12 is a perspective view of a further embodiment of the solution shown in Figures 9-11.

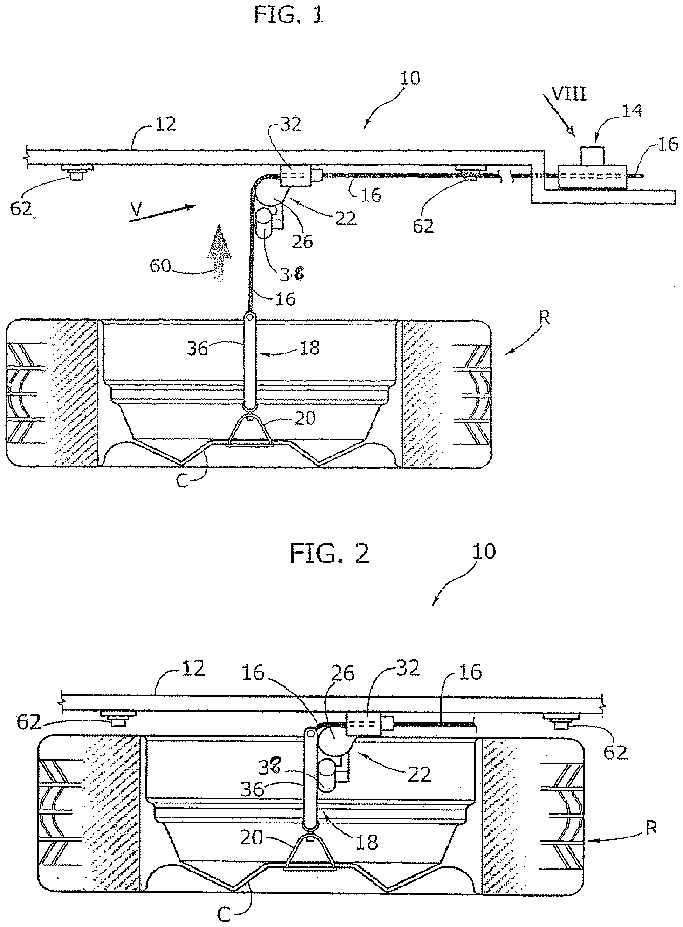

With reference to Figure 1, numeral 10 designates a device for raising and lowering a spare wheel R of a vehicle. In Figure 1, numeral 12 generically indicates the fixed structure of the vehicle. In the example schematically shown in the drawings, the fixed structure 12 is, for example, the bottom wall of the rear luggage compartment of the vehicle.

The device 10 according to the present invention comprises an actuation device 14 housed, for example, inside the luggage compartment. As will be further described below, the actuation device 14 provides control over the motion of a flexible cable 16, through which it is possible to control the raising and lowering of the wheel R. The flexible cable 16 is fixed, at one end thereof, to an engagement member 18 fitted with a part 20 that is so shaped as to engage into a central hole of the rim C of the wheel R.

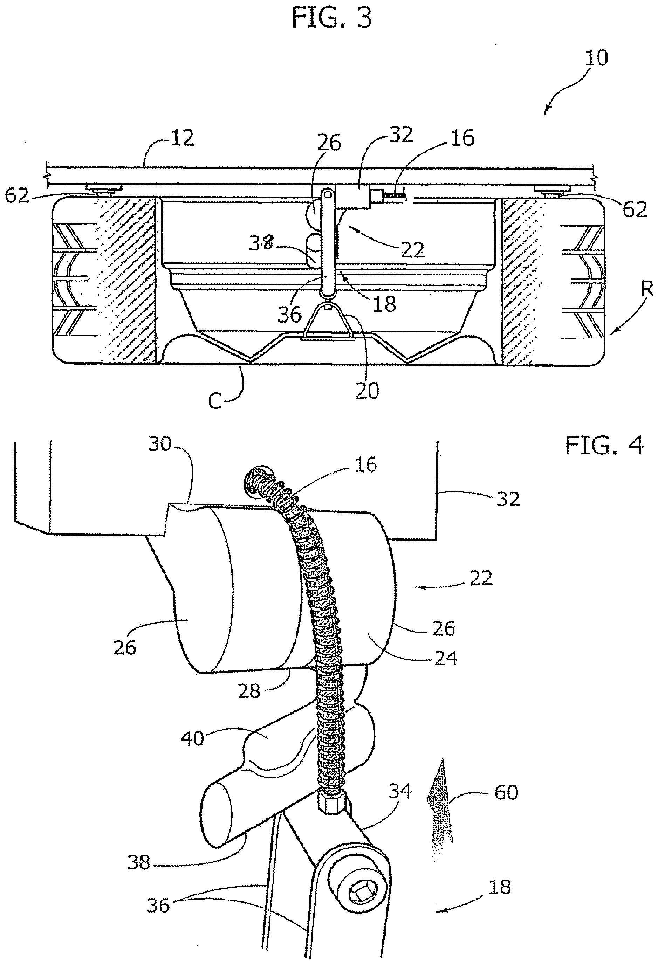

With particular reference to Figures 4 to 7, the device 10 comprises a transmission member 22 fixed with respect to the structure 12 of the vehicle. The transmission member 22 consists of a body, conveniently a metal body, substantially cylindrical in shape and arranged along a horizontal axis, with a curved outer surface 24 and two flat and parallel front surfaces 26. A groove is formed on the curved surface 24 for guiding the flexible cable 16. The transmission member 22 has a top surface 30 acting as a seat for retaining the engagement member 18 in the raised position. The transmission member 22 can, for example, be secured to a base 32, which in turn is secured to the bottom surface of the horizontal bottom wall 12 of the luggage compartment. The base 32 may have a hole, through which the flexible cable 16 extends.

As can be seen in Figures 4, 5 and 6, the cable 16 co-operates with the curved, or arched, outer surface 24 (in particular, with the guide 28) of the transmission member 22, from which the cable 16 is deviated, conveniently by approximately 90 degrees, around the transmission member 22.

With reference to Figures 4-7, the engagement member 18 comprises a horizontal bar 34, preferably shaped as a cylindrical pin having a circular cross-section. The bar 34 is fixed, at its two opposite ends, to two elongated plates 36 extending in the vertical direction. At their lower end, the elongated plates 36 are fixed to a second bar (not shown), which is centrally fixed to the part 20 (Figures 1-3) used for engaging the rim C of the wheel R. The upper bar 34 of the engagement member 18 is fixed to the lower end of the flexible cable 16 in a middle position between the two elongated plates 36.

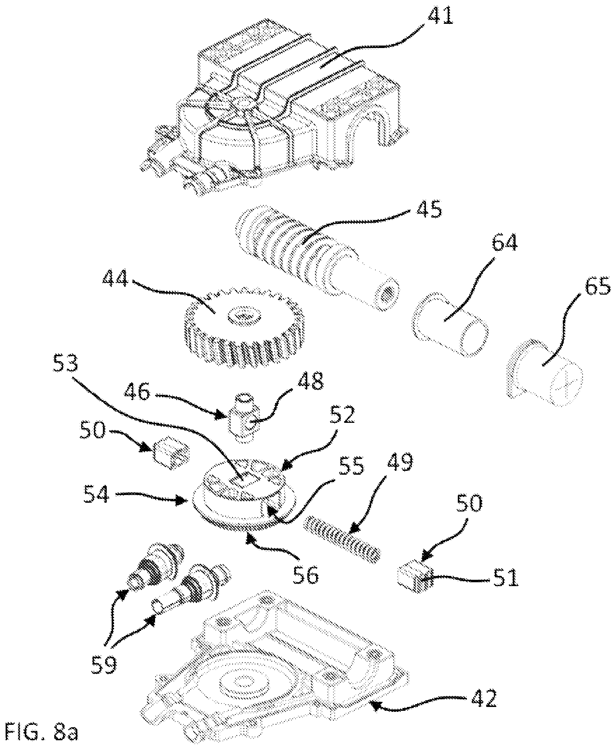

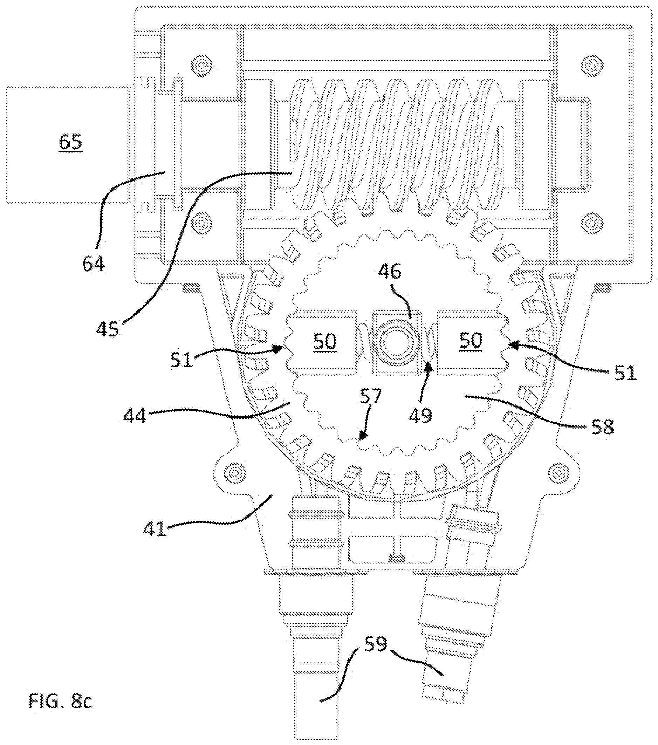

Still with reference to Figures 4 to 7, the device according to the present invention is advantageously equipped with an orientation member 38 for automatically orienting the engagement member 18 with respect to the transmission member 22 as the wheel is raised. The orientation member 38 preferably consists of a metal member shaped substantially like a pin and secured under the transmission member 22. The orientation member 28 extends downwards and is comprised between two planes passing through the front ends 16 of the transmission member 22. In the illustrative embodiment shown in the drawings, the orientation member 38 is secured to the bottom surface of the transmission member 22 by means of an appendix 40 welded to both the orientation member 38 and the transmission member 22. With reference to Figures 8a-c, the actuation device 14 comprises: a toothed wheel 44 co-operating with the flexible cable 16, and a worm screw 45 for turning the toothed wheel 44. The actuation device 14 is configured for generating friction that will prevent the wheel R from going down when the bar 34 is not engaged in the fixed transverse seat 30. Thus, should the bar 34 accidentally disengage from the seat, the wheel R will not go down so far as to create a dangerous condition, which would otherwise arise if full descent were allowed. Furthermore, the actuation device 14 concurs in keeping the bar 34 engaged in the fixed transverse seat 30. Conveniently, the actuation device 14 supports the wheel R in static and dynamic conditions. Preferably, friction is mainly generated between the worm screw 45 and the toothed wheel 44.

The toothed wheel 44 and the worm screw 45 are rotatably mounted inside a casing, in particular formed by a pair of half-shells 41, 42. The worm screw 45 can be made to turn about its own axis by means of a wrench, preferably the same wrench as the one used for screwing and unscrewing the wheel bolts. In particular, the axis of rotation of the toothed wheel 44 is perpendicular to that of the worm screw 45. In the example, the toothed wheel 44 is of the helical type.

By turning the worm screw 45, the user turns the toothed wheel 44, which, by mechanically engaging with the flexible cable 16, will wind or unwind said cable 16, thereby raising or lowering the wheel R. The wheel R can thus be brought into its seat in the completely raised storage position.

Conveniently, an anti-theft bushing 64 and an associated gasket 65 are mounted at one end of the worm screw 45. A radially protruding portion or edge of the bushing 64 and/or of the gasket 65 is housed and held in position in a respective seat of the casing.

As shown in particular in Figures 1 to 6, the flexible cable 16 is a helical flexible cable. Such a cable has, on its outer surface, a metal wire wound in a helical fashion, fixed onto the surface of a cable with inner strands. The flexible cable 16 can slide within a guiding sheath (not shown), which is fixed with respect to the structure 12. The sheath is preferably made as described in Italian patent application no. TO2006A000271 by the present Applicant. This type of sheath is particularly suitable for this application, because it allows the transmission of high forces, as required for raising wheels that may be as heavy as 40 Kg.

The outer surface of the cable 16 engages with a rotatable engagement member 54 rotatably constrained and coaxial to the toothed wheel 44. In particular, the rotatable engagement member 54 comprises a helical gear 56 that meshes with the helical outer surface of the cable 16. Therefore, the (winding and unwinding) motion of the flexible cable 16 is bound to the rotation of the toothed wheel 44.

The cable 16 is held in meshing contact with the rotatable engagement member 54, in particular the helical gear 56, by means of, for example, a fixed delimiting surface of the casing that defines a compartment wherein the cable 16 can slide along a trajectory where it remains in mesh with the rotatable engagement member 54.

Figures 1 to 3 and 4 to 7 illustrate the sequence for raising the wheel R.

Starting from the configuration wherein the wheel R is down, e.g. after replacement of a punctured tyre, the engagement device 18 is engaged with the rim C of the wheel R with the wheel R lying on the ground in the horizontal position. The actuation device 14 is then operated in the wheel raising direction. The wheel will thus be raised in the direction indicated by arrow 60 in Figure 1, with the terminal tract of the flexible cable 16 extending in the vertical direction, tangent to the curved surface 24 of the transmission member 22. The engagement member 18 will have a generic orientation relative to a vertical axis.

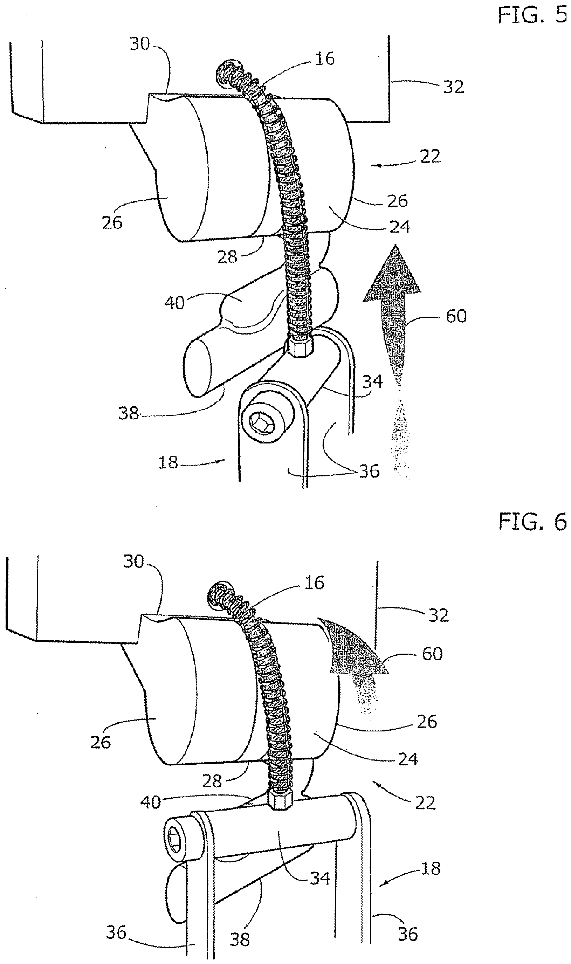

With reference to Figure 4, as the wheel R is raised farther, the bar 34 (generically oriented with respect to a vertical axis) comes in contact with the orientation member 38. As the motion of the flexible cable 16 continues in the raising direction, the tilted position of the orientation member 38 will cause the upper bar 34 of the engagement member 18 to turn about a vertical axis, as shown in Figures 5 and 6, until the bar 34 arranges itself with its own longitudinal axis parallel to the longitudinal axis of the transmission member 22 (position of Figure 6).

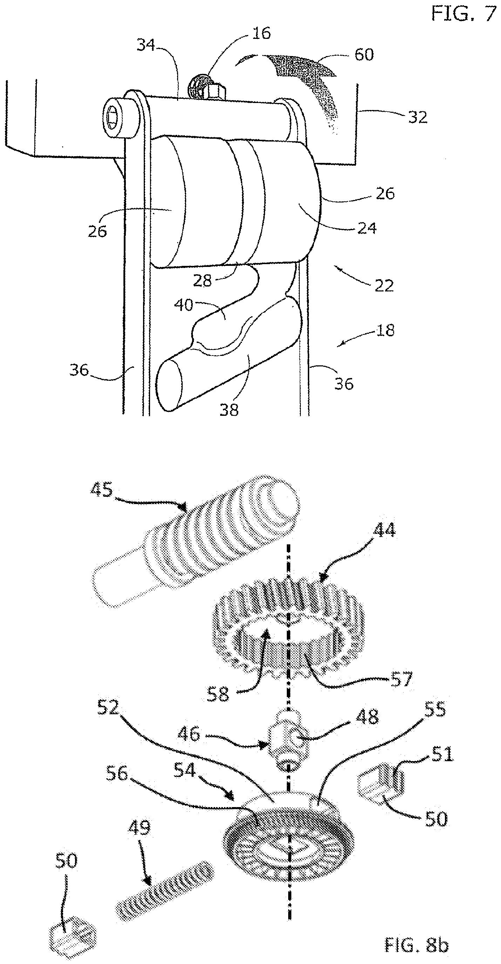

As the cable 16 continues to move in the raising direction, the upper bar 34 will climb over the transmission member 22, sliding on the curved surface 24 of the transmission member 22 until it engages into the seat 30 provided on the top part of the transmission member 22. The seat 30 is slightly lower than the top of the curved surface 24. As shown in Figure 7, the two elongated plates 36 of the engagement member 18 will arrange themselves outside the transmission member 22, parallel to the front surfaces 16 of the latter.

In the position in which the upper bar 34 is engaged in the seat 30, the engagement member 18 is held firmly in position by the transmission member 22. This position corresponds to the one shown in Figure 3, wherein the wheel R is held in the horizontal position under the bottom surface 12. Preferably, in this position the tyre of the wheel R is pressed against a number of reference members 62 fixed to the bottom side of the wall 12.

In order to lower the wheel, the actuation device 14 is operated in the opposite direction. The motion of the cable 16 in the wheel lowering direction causes the upper bar 34 to disengage from the transmission member 22. The thrust force of the helical cable 16 is much higher than that of normal flexible cables. This will allow pushing the bar 34 out of engagement with the respective seat 30.

The actuation device 14 comprises a clutch for rotatably decoupling the rotatable engagement member 54 and the toothed wheel 44 when the torque exerted by the worm screw 45 on the toothed wheel 44 exceeds a threshold value. Preferably, the clutch comprises:
- a movable friction member 50, associated with either the toothed wheel 44 or the rotatable engagement member 54,
- a return means 49, preferably an elastic means such as a spring, tending to push the friction member 50 against a friction surface 57 of either the rotatable engagement member 54 or the toothed wheel 44, for the purpose of generating friction.

In particular, the friction member 50 is associated with the rotatable engagement member 54 and tends to abut on the friction surface 57 of the toothed wheel 44.

A pair of friction members 50 are shown in the example, between which the return means 49 tends to push said friction members 50 outwards. In the preferred example, the return means 49 is an elastic means working by compression.

The friction member 50 is preferably slidable along a guided trajectory. In particular, the rotatable engagement member 54 includes a channel 55, or guide, in which the friction member 50 can slide. Said channel 55 is formed in an upper portion 52 of the rotatable engagement member 54. The channel 55 houses the return means 49. In the illustrated example, when the friction member 50 is acting upon the friction surface 57, said friction member 50 protrudes at least partially from the channel 55. In particular, the channel 55 is straight and intersects the axis of rotation of the toothed wheel 44; in the example, the channel 55 is perpendicular to the axis of rotation of the toothed wheel 44.

A pin 46 keeps the rotatable engagement member 54 coaxial to the toothed wheel 44, while leaving them mutually free to rotate about the common axis of rotation. A hole 48 in the pin 46 houses the return means 49. In the illustrated example, the rotatable engagement member 54 and the toothed wheel 44 are two distinct parts; however, according to an alternative embodiment of the invention, the rotatable engagement member 54 and the toothed wheel 44 are made as one piece. In particular, the pin 46 is rotatably constrained to the rotatable engagement member 54 and rotatably unconstrained from the toothed wheel 44. For example, the pin 46 has a portion (in the example, the medial portion) having a polygonal (in the example, rectangular) cross-section with reference to the axis of rotation of the toothed wheel 44, said cross-section being received in an aperture 53 with the same shape, of the rotatable engagement member 54. In particular, that portion of the pin 46 which has a cross-section is the one whereon the hole 48 is formed. The upper part of the pin 46 is cylindrical and is housed in a circular hole of the toothed wheel 44.

With reference to Figure 8b, which shows some components of the actuation device 14 viewed from below, the friction surface 57 is provided on a radially internal circular surface of a cavity 58 of the toothed wheel 44. In the drawing, the cavity 58 faces downwards. The upper portion 52 of the rotatable engagement member 54 is at least partially inserted in the cavity 58. The channel 55 faces towards the friction surface 57. The friction members 50 abut on said friction surface 57 through the effect of the repulsion force exerted by the return means 49 between them. In particular, the friction member 50 has a friction face 51 adapted to abut on the friction surface 57. For example, the friction surface 57 and the friction members 50 have protrusions and recesses that ensure a predefined coefficient of friction. Therefore, by appropriately choosing this coefficient of friction, and by selecting a suitable elastic constant for the return means 49, it is possible to determine when the clutch should come on according to specific operating requirements. It is thus possible to set the threshold torque, or limit torque, applicable to the toothed wheel 44.

Thanks to the clutch, it is possible to prevent some parts of the device of the invention from undergoing excessive mechanical stress; in particular, it is possible to avoid excessive tension of the cable 16, thereby reducing the risk of malfunctions. For example, when the user, while putting the wheel R back into the raised storage position, exerts too much torque (i.e. a torque higher than the threshold torque of the clutch) on the worm screw 45, and hence on the toothed wheel 44, the clutch will come on. When the clutch comes on, the friction members 50 will slide on the friction surface 57, thereby allowing the toothed wheel 44 to rotate relative to the rotatable engagement member 54. Therefore, the toothed wheel 44 will slip relative to the rotatable engagement member 54. When the torque exerted by the user returns below the threshold value, the toothed wheel 44 and the rotatable engagement member 54 will become mutually engaged again, thus being rotatably constrained again about the common axis of rotation.

A pair of cable gaskets 59 are located on the two apertures where the flexible cable 16 runs in and out through the casing. In particular, the cable gaskets 59 are interposed between the half-shells 41, 42.

As can be easily understood, the device according to the present invention allows holding the wheel R firmly in the raised position, while providing a safety system against accidental release of the bar 34 from the fixed transverse seat 30.

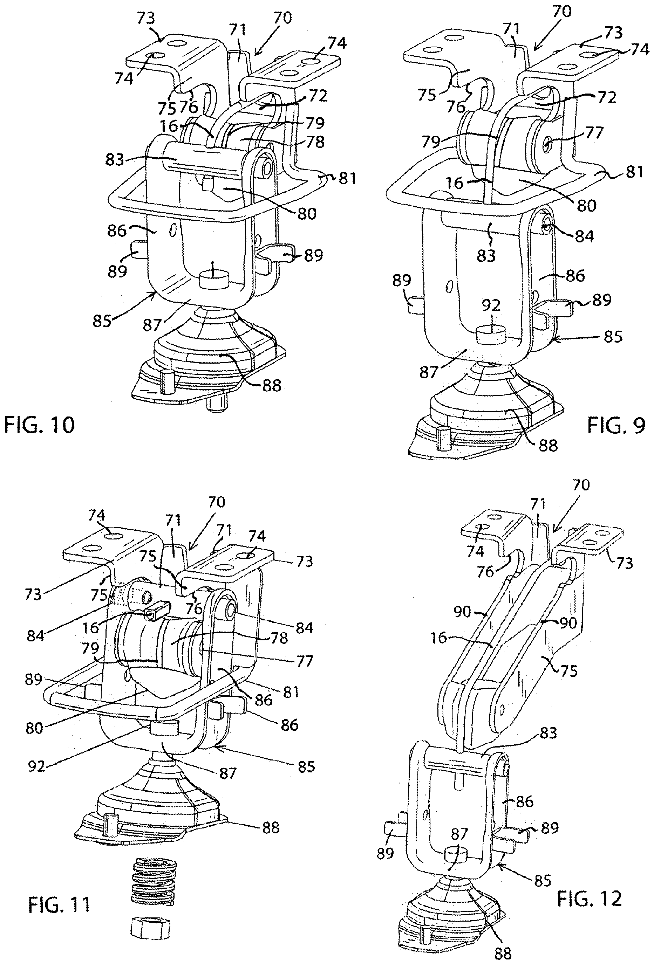

Figures 9, 10 and 11 show a second embodiment of the device according to the present invention, which nevertheless requires no modifications to the actuation device 14 as previously described herein and illustrated in Figures 8a-c.

In this second embodiment, the device for raising a spare wheel comprises a support bracket 70 made up of two rear plates 71 joined by a crosspiece 72 and forming two backward-bent boards 73 lying in the same plane and provided with holes 74 for fastening the bracket 70 and the entire device, which in turn is connected to the fixed structure 12 of the vehicle (Fig. 1).

The backward-bent boards 73 extend vertically with respect to the plates 75 provided with insertion grooves 76 and holes 77 for fixing the transmission member 78. The latter is shaped like two truncated cones having their minor bases coupled together to form a groove 79 in the middle.

In the lower part, which extends from the transmission member 78, there is an orientation member 80 in the form of a conical bumper. A containment rod or bar 81 is also constrained to the rear plates 71 of the support bracket 70.

The engagement member 82 fixed to the flexible cable 16 consists of a horizontal bar 83 in the form of a cylinder having its ends 84 fixed to the upper ends of the sides 86 of the U-shaped plate 85.

The crosspiece 87 of the plate 85 supports and holds (through the pin 92) the bell 88 for supporting the rim C of the wheel R (Fig. 1) .

Two substantially C-shaped safety brackets 89 are also arranged along, in particular welded to, the sides 86 of the U-shaped plate 85.

The device operates as follows.

Starting from the condition wherein the wheel is down (Fig. 1), the flexible cable 16 is operated by means of the device 14 (Figs. 8a-c) exactly as in the case of the first embodiment.

The cable pulls up the wheel R by means of the raising device 82 until the wheel arrives near the bracket 70 (Fig. 9).

While the device 82 is returning into the up position, the pin 83 of the plate 85 comes in contact with the bumper 80, which will automatically orient the pin; this means that the wheel is in a position (Fig. 10) such that, during the raising phase, the ends 84 of the pin 83 will slide in the insertion groove 76 of the bracket 70 (Fig. 11).

Once this position has been reached, the wheel R will be firmly engaged in the raised position, with the cable 16 tight and pressed against the groove 79 of the transmission 78, which determines the proper positioning thereof.

When the wheel R is released, the cable 16 will unwind, causing the pin 83 to move past the insertion seats 76 (Fig. 10), so that the U-shaped bracket 85 can go down until the wheel R lies on the ground.

The containment rod 81 of the U-shaped bracket 85 prevents any excessive oscillation of the raising device during the wheel raising and lowering phases that would otherwise move the pin 83 away from the triangular bumper 80, which, on the contrary, should orient the pin 83 to cause it to properly enter the seat 76 of the bracket 70.

The safety brackets 89 are useful to avoid that, while driving, the raising device 82 might be released because of accidental jerks of the vehicle, i.e. it prevents the pin 83 from coming out of the seat 76 of the bracket 70, which would otherwise result in the wheel remaining suspended under no stable constraints.

In fact, should the device oscillate, the safety brackets 89 will move on the containment rod 81, thereby preventing the above-mentioned accidental release of the pin 83 from the seat 76. Figure 12 shows a variant of the embodiment of Figs. 9-11; more specifically, this variant is suited to the case wherein the wheel, in addition to having to be raised and lowered, must also be translated sideways because some structural members of the vehicle require that the raising device be installed in such a position that does not allow for simple raising and lowering of the same device.

As can be seen in Fig. 12, in this case the plates 75 of the bracket 70 extend obliquely, preferably for a length substantially equal to the inner radius of the spare wheel, instead of bringing the transmission member 78 in the immediate vicinity of (under) the insertion groove 76 for the bar 83.

Thus, during the raising operation the wheel will be guided on the upper surface 90 of the plates 75, while however avoiding the crosspieces or axial shafts that would make the bracket 70 inaccessible in the absence of such a translation during the raising action.

Of course, without prejudice to the principle of the invention, the construction details and embodiments may be varied extensively from what has been described and illustrated herein, without however departing from the protection scope of the invention as set out in the appended claims.

## Claims

1. Device for raising and lowering a spare wheel (R) of a vehicle to and from its horizontal storage position outside the vehicle, comprising:
- an actuation device (14);
- a flexible cable (16) co-operating with the actuation device (14);
- an engagement member (18, 85) fixed to one end of the flexible cable (16);
- a transmission member (22, 78), fixed with respect to the structure (12) of the vehicle and having a substantially cylindrical shape, arranged along its own longitudinal axis; the flexible cable (16) co-operating with a curved outer surface (24) of the transmission member (22, 78), from which the flexible cable (16) is deviated around the transmission member (22, 78);
the engagement member (18, 85) comprising a bar (34, 83) with its horizontal axis fixed to one end of the flexible cable (16) ;
wherein a fixed transverse seat (30, 76) is obtained on top of the transmission member (22, 78), and said bar (34, 83) is adapted to engage into said fixed transverse seat (30, 76) for stable anchorage of the wheel (R) to the structure of the vehicle (12) when the wheel is in the completely raised position;
**characterized in that** the actuation device (14) includes:
- a toothed wheel (44) co-operating with the flexible cable (16), and
- a worm screw (45) for turning the toothed wheel (44),
wherein the actuation device (14) is configured for generating friction that will prevent the spare wheel (R) from going down when the bar (34) is not engaged in the fixed transverse seat (30);
wherein the actuation device (14) comprises a clutch for rotatably decoupling the rotatable engagement member (54) and the toothed wheel (44) when the torque exerted by the worm screw (45) on the toothed wheel (44) exceeds a threshold value.

2. Device according to claim 1, wherein the outer surface of the flexible cable (16) engages with a rotatable engagement member (54) rotatably constrained and coaxial to the toothed wheel (44).

3. Device according to claim 2, wherein the rotatable engagement member (54) comprises a helical gear (56) that meshes with a helical outer surface of the flexible cable (16) .

4. Device according to any one of the previous claims, wherein the clutch comprises:
- a movable friction member (50), associated with either the toothed wheel (44) or the rotatable engagement member (54),
- a return means (49) tending to push the friction member (50) against a friction surface (57) of either the rotatable engagement member (54) or the toothed wheel (44), for the purpose of generating friction.

5. Device according to claim 4, wherein the friction member (50) is associated with the rotatable engagement member (54) and tends to abut on the friction surface (57) of the toothed wheel (44).

6. Device according to any one of the previous claims, wherein the friction member (50) is slidable along a guided trajectory.

7. Device according to claim 6, wherein the rotatable engagement member (54) includes a channel (55), or guide, in which the friction member (50) can slide.

8. Device according to any one of claims 5 to 7, wherein the friction surface (57) is provided on a radially internal circular surface of a cavity (58) of the toothed wheel (44).

9. Device according to claim 8, wherein an upper portion (52) of the rotatable engagement member (54) is at least partially inserted in the cavity (58).

10. Device according to claims 8 and 9, wherein the channel (55) faces towards the friction surface (57).

## Patentansprüche

1. Vorrichtung zum Anheben und Absenken eines Reserverads (R) eines Fahrzeugs zu und von seiner horizontalen Lagerposition außerhalb des Fahrzeugs, umfassend:
- eine Betätigungsvorrichtung (14);
- ein flexibles Kabel (16), das mit der Betätigungsvorrichtung (14) zusammenarbeitet;
- ein Eingriffselement (18,85), das an einem Ende des flexiblen Kabels (16) befestigt ist;
- ein Übertragungselement (22, 78), das in Bezug auf die Struktur (12) des Fahrzeugs befestigt ist und eine im wesentlichen zylindrische Form aufweist und entlang seiner eigenen Längsachse angeordnet ist; das flexible Kabel (16), das mit einer gekrümmten Außenfläche (24) des Übertragungselements (22, 78) zusammenarbeitet, von dem aus das flexible Kabel (16) um das Übertragungselement (22, 78) herum abgelenkt ist;
das Eingriffselement (18, 85) umfasst eine Stange (34, 83), deren horizontale Achse an einem Ende des flexiblen Kabels befestigt ist (16);
wobei ein fester Quersitz (30, 76) oben auf dem Übertragungselement (22, 78) erhalten wird und genannte Stange (34, 83) angepasst ist, in den festen Quersitz (30, 76) zur stabilen Verankerung des Rades (R) zur Struktur des Fahrzeugs (12) einzugreifen, wenn sich das Rad in der vollständig angehobenen Position befindet;
**dadurch gekennzeichnet, dass** die Betätigungsvorrichtung (14) umfasst:
- einem Zahnrad (44), das mit dem flexiblen Kabel (16) zusammenarbeitet, und
- eine Schneckenschraube (45) zum Drehen des Zahnrades (44),wobei die Betätigungsvorrichtung (14) Spannung erzeugt die verhindert, dass das Reserverad (R) nach unten geht, wenn die Stange (34) nicht in den festen Quersitz (30) eingreift;
wobei die Betätigungsvorrichtung (14) eine Kupplung zum drehbaren Entkoppeln des drehbaren Eingriffselements (54) und des Zahnrads (44) umfasst, wenn das von der Schneckenschraube (45) auf das Zahnrad (44) ausgeübte Drehmoment einen Schwellenwert überschreitet.

2. Vorrichtung nach Anspruch 1, wobei die Außenfläche des flexiblen Kabels (16) mit einem drehbaren Eingriffselement (54) in Eingriff steht, das drehbar und koaxial zum Zahnrad (44) gespannt ist.

3. Vorrichtung nach Anspruch 2, wobei das drehbare Eingriffselement (54) ein Stirnrad (56) umfasst, das mit einer Schraubenaußenfläche des flexiblen Kabels (16) kämmt.

4. Vorrichtung nach einem der vorhergehenden Ansprüche, wobei die Kupplung umfasst:
- ein bewegliches Reibungselement (50), das entweder dem Zahnrad (44) oder dem drehbaren Eingriffselement (54) zugeordnet ist;
- eine Rückführeinrichtung (49), die dazu dient, das Reibungselement (50) gegen eine Reibfläche (57) entweder des drehbaren Eingriffselements (54) oder des Zahnrads (44) zu drücken, um Reibung zu erzeugen.

5. Vorrichtung nach Anspruch 4, wobei das Reibungselement (50) dem drehbaren Eingriffselement (54) zugeordnet ist und dazu neigt, an der Reibfläche (57) des Zahnrades (44) zu stoßen.

6. Vorrichtung nach einem der vorhergehenden Ansprüche, wobei das Reibungselement (50) entlang einer Führung verschiebbar ist.

7. Vorrichtung nach Anspruch 6, wobei das drehbare Eingriffselement (54) einen Kanal (55) oder eine Führung enthält, in der das Reibungselement (50) gleiten kann.

8. Vorrichtung nach einem der Ansprüche 5 bis 7, wobei die Reibfläche (57) auf einer radial inneren kreisförmigen Fläche eines Hohlraums (58) des Zahnrads (44) bereitgestellt ist.

9. Vorrichtung nach Anspruch 8, wobei ein oberer Abschnitt (52) des drehbaren Eingriffselements (54) zumindest teilweise in den Hohlraum (58) eingeführt ist.

10. Vorrichtung nach Anspruch 8 und 9, wobei der Kanal (55) zur Reibfläche (57) zeigt.

## Revendications

1. Dispositif pour lever et abaisser une roue de secours (R) d'un véhicule vers et à partir de sa position de rangement horizontale à l'extérieur du véhicule, comprenant :
- un dispositif d'actionnement (14) ;
- un câble flexible (16) coopérant avec le dispositif d'actionnement (14) ;
- un élément de mise en prise (18, 85) fixée à une extrémité du câble flexible (16) ;
- un élément de transmission (22, 78), fixé par rapport à la structure (12) du véhicule et ayant une forme sensiblement cylindrique, agencé le long de son propre axe longitudinal ; le câble flexible (16) coopérant avec une surface extérieure incurvée (24) de l'élément de transmission (22, 78), à partir de laquelle le câble flexible (16) est dévié autour de l'élément de transmission (22, 78) ;
l'élément de mise en prise (18, 85) comprenant une barre (34, 83) avec son axe horizontal fixé à une extrémité du câble flexible (16) ;
dans lequel un siège transversal fixe (30, 76) est obtenu sur le dessus de l'élément de transmission (22, 78), et ladite barre (34, 83) est adaptée pour venir en prise dans ledit siège transversal fixe (30, 76) pour un ancrage stable de la roue (R) à la structure du véhicule (12) lorsque la roue est dans la position complètement relevée ;
**caractérisé en ce que** le dispositif d'actionnement (14) comprend :
- une roue dentée (44) coopérant avec le câble flexible (16), et
- une vis sans fin (45) pour faire tourner la roue dentée (44),
dans lequel le dispositif d'actionnement (14) est configuré pour générer un frottement qui empêche la roue de secours (R) de descendre lorsque la barre (34) n'est pas mise en prise dans le siège transversal fixe (30) ;
dans lequel le dispositif d'actionnement (14) comprend un embrayage pour découpler en rotation l'élément de mise en prise rotatif (54) et la roue dentée (44) lorsque le couple exercé par la vis sans fin (45) sur la roue dentée (44) dépasse une valeur de seuil.

2. Dispositif selon la revendication 1, dans lequel la surface extérieure du câble flexible (16) vient en prise avec un élément de mise en prise rotatif (54) contraint en rotation et coaxial à la roue dentée (44).

3. Dispositif selon la revendication 2, dans lequel l'élément de mise en prise rotatif (54) comprend un engrenage hélicoïdal (56) qui engrène avec une surface extérieure hélicoïdale du câble flexible (16).

4. Dispositif selon l'une quelconque des revendications précédentes, dans lequel l'embrayage comprend :
- un élément de frottement mobile (50), associé à la roue dentée (44) ou à l'élément de mise en prise rotatif (54),
- des moyens de rappel (49) tendant à pousser l'élément de frottement (50) contre une surface de frottement (57) de l'élément de mise en prise rotatif (54) ou de la roue dentée (44), dans le but de générer un frottement.

5. Dispositif selon la revendication 4, dans lequel l'élément de frottement (50) est associé à l'élément de mise en prise rotatif (54) et tend à venir en butée sur la surface de frottement (57) de la roue dentée (44).

6. Dispositif selon l'une quelconque des revendications précédentes, dans lequel l'élément de frottement (50) peut coulisser le long d'une trajectoire guidée.

7. Dispositif selon la revendication 6, dans lequel l'élément de mise en prise rotatif (54) comprend un canal (55), ou un guide, dans lequel l'élément de frottement (50) peut coulisser.

8. Dispositif selon l'une quelconque des revendications 5 à 7, dans lequel la surface de frottement (57) est prévue sur une surface circulaire radialement intérieure d'une cavité (58) de la roue dentée (44).

9. Dispositif selon la revendication 8, dans lequel une partie supérieure (52) de l'élément de mise en prise rotatif (54) est au moins partiellement insérée dans la cavité (58).

10. Dispositif selon les revendications 8 et 9, dans lequel le canal (55) est orienté vers la surface de frottement (57).
